(19) Europäisches Patentamt
European Patent Office
Office européen des brevets

(11) **EP 2 386 835 B1**

(12) **EUROPÄISCHE PATENTSCHRIFT**

(45) Veröffentlichungstag und Bekanntmachung des Hinweises auf die Patenterteilung:
**25.11.2015 Patentblatt 2015/48**

(51) Int Cl.:
*G01F 25/00* *(2006.01)*     *G01F 1/66* *(2006.01)*

(21) Anmeldenummer: **10162691.9**

(22) Anmeldetag: **12.05.2010**

(54) **Ultraschallmessung der Strömungsgeschwindigkeit eines Fluids in einer Rohrleitung**

Ultrasound measurement of the flow speed of a fluid in a tubular conduit

Mesure par ultrasons de la vitesse d'écoulement d'un fluide dans une conduite

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**16.11.2011 Patentblatt 2011/46**

(73) Patentinhaber: **SICK Engineering GmbH**
**01458 Ottendorf-Okrilla (DE)**

(72) Erfinder:
• **Dietz, Toralf**
  **01465 Dresden (DE)**

• **Lansing, John**
  **Houston TX 77069 (US)**

(74) Vertreter: **Ludewigt, Christoph**
  **Sick AG**
  **Intellectual Property**
  **Erwin-Sick-Strasse 1**
  **79183 Waldkirch (DE)**

(56) Entgegenhaltungen:
**EP-A1- 1 378 727**     **EP-A1- 1 936 333**
**EP-A1- 2 072 972**     **DE-A1-102005 047 790**
**DE-A1-102008 029 772**

EP 2 386 835 B1

**Beschreibung**

Die Erfindung betrifft eine Ultraschallvorrichtung und ein Verfahren zum Messen der Strömungsgeschwindigkeit eines Fluids in einer Rohrleitung nach dem Oberbegriff von Anspruch 1 beziehungsweise Anspruch 13.

Strömungsgeschwindigkeiten in Rohrleitungen und Kanälen können mittels Ultraschallmesstechnik nach dem Differenzlaufzeitverfahren ermittelt werden. Ein wichtiges und anspruchsvolles Anwendungsfeld sind Gaszähler für Erdgaspipelines, wo wegen der immensen beförderten Gasmengen und des Rohstoffwerts schon geringste Abweichungen in der Messgenauigkeit deutlich merklichen wirtschaftlichen Werten entsprechen.

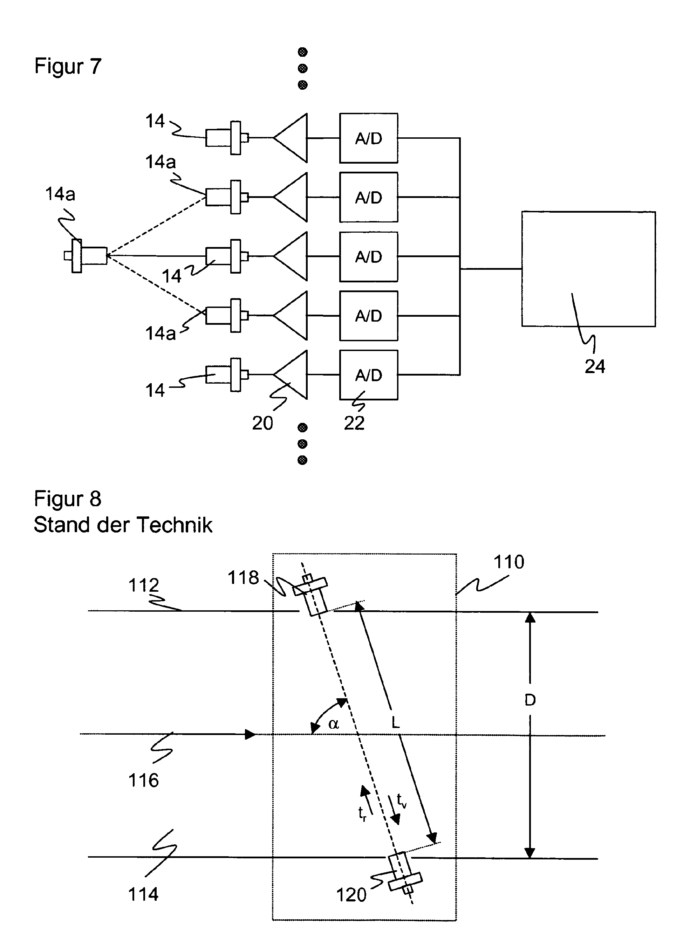

Ein bekanntes Messprinzip ist in Figur 8 dargestellt. Als wesentlicher Bestandteil einer herkömmlichen Messvorrichtung 110 sind zwei Ultraschallwandler 118, 120 in einem Winkel in der Wandung einer Rohrleitung 112 angeordnet, in der ein Fluid 114 in Pfeilrichtung 116 strömt. Es werden Ultraschallpulse auf dem Messpfad zwischen den Ultraschallwandlern 118, 120 quer zu der Strömung des Fluids ausgesandt und empfangen, wobei die Ultraschallwandler 118, 120 wechselweise als Sender und Empfänger arbeiten. Die durch das Fluid transportierten Ultraschallsignale werden in Strömungsrichtung beschleunigt und gegen die Strömungsrichtung abgebremst. Die resultierende Laufzeitdifferenz wird mit geometrischen Größen zu einer mittleren Strömungsgeschwindigkeit des Fluids verrechnet. Mit der Querschnittsfläche ergibt sich daraus der Betriebsvolumenstrom, welcher beispielsweise bei nach Volumen abgerechnetem Fluid die interessierende Messgröße ist. Die geometrischen Verhältnisse sind durch die folgenden Variablen beschrieben:

$v$: Strömungsgeschwindigkeit des Fluids in der Leitung

$L$: Länge des Messpfades zwischen den beiden Ultraschallwandlern

$\alpha$: Winkel, unter dem die Ultraschallwandler senden und empfangen

$Q$: Volumenstrom

$D$: Durchmesser der Leitung

$t_v$: Laufzeit des Ultraschalls mit der Strömung

$t_r$: Laufzeit des Ultraschalls gegen die Strömung

Daraus ergeben sich für die gesuchten Größen $v$ und $Q$ folgende Beziehungen:

$$v = L/(2\cos\alpha)\,(1/t_v - 1/t_r)$$

und

$$Q = v\,1/4\,D^2\,\pi.$$

Auf diese Weise wird demnach die lokale, mittlere Strömungsgeschwindigkeit an der Position des Messpfades bestimmt. Das ergibt aber nur bei gleichmäßigen Strömungen einen genauen Messwert. Deshalb werden für anspruchsvollere Anwendungen mehrere Messpfade auf dem Querschnitt der Rohrleitung geometrisch verteilt. Durch gewichtete Addition der Messwerte der einzelnen Messpfade wird dann ein genauerer Wert für die mittlere Strömungsgeschwindigkeit auf der gesamten Querschnittsfläche ermittelt. Eine Reihe von Messpfadkonfigurationen oder -layouts werden in der Norm ISO17089-1 vorgestellt.

Auch mit mehreren Messpfaden ist der Übergang auf eine mittlere Flächengeschwindigkeit aus den einzelnen Stützstellen, die von den Messpfaden gebildet werden, mit einem Approximationsfehler verbunden. Dieser Fehler ist nicht immer minimal, sondern beispielsweise nur dann, wenn das gemessene Strömungsprofil dem für ein Approximationspolynom gewählten Strömungsprofil entspricht. Eine Erhöhung der Messpfadzahl ist aber aus geometrischen Gründen nur bedingt möglich und außerdem mit einer erheblichen Erhöhung der Herstellungskosten verbunden.

Aus der EP 2 072 972 A1 ist eine Vorrichtung zum Messen der Bewegung eines Fluids in einem Rohr bekannt, die insgesamt 32 paarweise zueinander ausgerichtete Ultraschallwandler aufweist, wobei zusätzliche Messpfade auch zu den Ultraschallwandlern aufgespannt werden, die den zugeordneten Ultraschallwandlern benachbart sind. Diese ungeheure Vielzahl von Ultraschallwandlern und Messpfaden führt zu einem sehr teuren System und einer komplizierten Auswertung. Dabei sind Ultraschallwandler auch am Boden vorgesehen, die aber in der Praxis regelmäßig verschmutzen. Für den robusten, kostenbewussten Industrieeinsatz ist das System daher ungeeignet, zumal es keinerlei Diagnosefunktionen besitzt.

Um eine korrekte Messung sicherzustellen, werden die Messwerte überprüft, damit unter anderem Strömungsprofiländerungen erkannt werden. Mögliche Ursachen hierfür liegen in einer geänderten Wandrauhigkeit durch Verschmutzung und Korrosion, in partiell blockierten Strömungskonditionieren oder -gleichrichtern oder in unvollständig geöffneten Ventilen beziehungsweise Schiebern.

Eine Diagnosemöglichkeit der Messrichtigkeit besteht darin, den Messwert mit einem zweiten, unabhängig ermittelten Messwert zu vergleichen. Hierzu kann ein weiteres Ultraschallmesssystem eingesetzt werden. Um in diesem Vergleichszähler eine gleichartige Reaktion auf eine Störbeeinflussung zu vermeiden, unterscheidet sich das Pfadlayout des Vergleichszählers von dem des eigentlichen Ultraschallmessgeräts. Eine bekannte Umsetzung dieses Prinzips ist die Kombination eines Mehrpfadsystems mit einem Einpfadsystem, wie in der Arbeit von Michael Brown, "Custody Transfer Implementation of Multi-path Ultrasonic Meters", A.G.A. Operating Section Operations Conference in Seattle, Washington, 18.-21.Mai 1998 vorgestellt. Der Vergleichszähler erhöht aber den Herstellungs- und Montageaufwand erheblich.

Die DE 10 2007 004 936 A1 offenbart ein Ultraschalldurchflussmessgerät mit mehreren durch jeweils einen Reflektor realisierten V-förmigen Messpfaden sowie einem oder mehreren zusätzlichen Ultraschallwandlern, die einen weiteren V-förmigen Messpfad in senkrechter Richtung aufspannen, um Schmutzansammlungen am Boden des Messrohrs zu erkennen. Hierfür sind die zusätzlichen Ultraschallwandler samt zugehöriger Elektronik erforderlich.

Aus der DE 10 2008 029 772 A1 ist ein Ultraschallsystem zur Durchflussmessung bekannt. Dabei spannen zwei Ultraschallsensoren einen v-förmigen Messpfad auf. Jeder Ultraschallsensor umfasst mehrere nebeneinander liegende Wandlerelemente. In einer Diagnosephase werden die unterschiedlichen Kombinationen von Wandlerelementen längs des v-förmigen Messpfades aktiviert, um Prozessgrößen wie beispielsweise die Signalstärke zu ermitteln. Das optimale Paar von Wandlerelementen, etwa mit der maximalen Signalstärke, wird dann für den Messbetrieb ausgewählt.

In der EP 1 378 727 A1 wird ein Ultraschalldurchflussmesser beschrieben, bei dem ein Teilbereich der Wandung des Leitungsrohrs eine Membran zum Abstrahlen beziehungsweise Empfangen von Ultraschall bildet. Die Wandler ermöglichen unter anderem einen Abstrahlkegel mit großer Öffnung. Dadurch können mehr Messpfade aufgespannt werden, da einem Sender mehrere Empfänger zugeordnet werden können.

Es ist daher Aufgabe der Erfindung, die Messgenauigkeit und Zuverlässigkeit einer Ultraschallmessvorrichtung zu verbessern.

Diese Aufgabe wird durch eine Ultraschallmessvorrichtung gemäß Anspruch 1 und ein Verfahren zur Messung der Strömungsgeschwindigkeit eines Fluids in einer Rohrleitung mittels Ultraschall gemäß Anspruch 13 gelöst. Dabei geht die Erfindung von dem Grundgedanken aus, eine Diagnosefunktion als Vergleich eines zweiten, unabhängigen Diagnosemesswerts mit dem eigentlichen Hauptmesswert zu implementieren. Da-zu wird mindestens einer der vorhandenen Messpfade nicht für die Bestimmung des Hauptmesswerts, sondern des Diagnosemesswerts verwendet. Damit nicht für den Diagnosemesspfad eigens weitere Ultraschallwandler angebracht werden müssen, werden die Schallkegel zumindest einiger der vorhandenen Ultraschallwandler so verbreitert, dass mindestens ein zusätzlicher Messpfad entsteht.

Es gibt demnach aus geometrischer Sicht primäre Messpfade, die jeweils zwischen einem Paar zueinander ausgerichteter Ultraschallwandler aufgespannt sind, deren Abstrahlachsen also aufeinander ausgerichtet sind. Diese Ausrichtung kann sowohl direkt als auch indirekt über einen Reflektor erfolgen. Zusätzlich entstehen aufgrund der verbreiterten Schallkegel sekundäre Messpfade zu Ultraschallwandlern, die zu dem aufgrund der Ausrichtung zugeordneten Ultraschallwandler benachbart angeordnet sind. In der Regel werden dabei sekundäre Messpfade zu den nächsten Nachbarn des zugeordneten Ultraschallwandlers verwendet, weil hier der Winkel der günstigste ist, dies ist aber nicht zwingend. Ein solcher Ultraschallwandler mit verbreitertem Schallkegel ist demnach an mehreren Messpfaden beteiligt. Den primären und sekundären Messpfaden kann nun in funktionaler Sicht auf zunächst beliebige Weise entweder die Funktion als Hauptmesspfad zur Ermittlung des Hauptmesswerts oder als Diagnosemesspfad zugewiesen werden.

Die Erfindung hat den Vorteil, dass durch die Diagnosefunktion die Zuverlässigkeit des Hauptmesswerts stets überprüfbar ist. Durch kontinuierlichen Vergleich unterschiedlicher Messergebnisse, die auf jeweils einem anderen Pfadlayout beruhen, wird die Messwertqualität und die Vertrauenswürdigkeit des Messwerts bei gleichbleibendem Aufwand an Ultraschallsensorik erhöht. Beeinträchtigungen der Messgenauigkeit werden rasch erkannt und führen beispielsweise zu einer Wartungsanforderung. Für diese Diagnosefunktion müssen keine zusätzlichen Ultraschallwandler eingesetzt werden, sondern die zusätzlichen sekundären Messpfade werden entweder als Diagnosemesspfade eingesetzt oder ersetzen die primären Messpfade für die Bestimmung des Hauptmesswerts, wenn stattdessen ein primärer Messpfad als Diagnosemesspfad verwendet werden soll. Der zusätzliche Aufwand durch die in den Hauptzähler integrierte Vergleichsmessung ist deshalb minimal.

Mindestens ein Diagnosemesspfad ist bevorzugt ein sekundärer Messpfad. An der eigentlichen Messung des Hauptmesswerts ändert sich dann nichts, sämtliche primären Messpfade stehen weiterhin als Hauptmesspfade zur Verfügung. Somit sind die notwendigen Anpassungen bei Integration der Diagnosefunktion besonders gering.

Der mindestens eine Diagnosemesspfad ist bevorzugt diametral angeordnet. Damit ist die Empfindlichkeit auf mögliche Strömungsprofiländerungen maximal, so dass die Kontrollfunktion optimal unterstützt wird.

Vorteilhafterweise stimmen die Hauptmesspfade mit den primären Messpfaden überein. Das Pfadlayout und damit die Auswertung bei der Bestimmung des Hauptmesswerts unterscheidet sich dann nicht von demjenigen einer Ultraschallmessvorrichtung ohne Diagnosefunktion. Noch bevorzugter stimmt auch der mindestens eine Diagnosemesspfad mit dem mindestens einen sekundären Messpfad überein. In diesem Fall ist dann die geometrische Aufteilung in primäre und sekundäre Messpfade und die funktionale Aufteilung in Hauptmesspfade und Diagnosemesspfade identisch.

Die primären Messpfade sind vorzugsweise parallel zueinander ausgerichtet. Damit lässt sich das Strömungsprofil ohne Redundanzen und demnach mit möglichst wenigen Ultraschallwandlern besonders gut approximieren.

Bevorzugt sind zwei oder vier primäre Messpfade vorgesehen. Dafür genügen vier beziehungsweise acht Ultraschallwandler. Entsprechend sind vorzugsweise ein oder zwei sekundäre Messpfade vorgesehen, um ungünstige Winkel für diese sekundären Messpfade zu vermeiden. Aus funktionaler Sicht ausgedrückt sind bevorzugt zwei oder vier Hauptmesspfade und/oder ein oder zwei Diagnosemesspfade vorgesehen, wobei die Zuordnung zu den primären und sekundären Messpfaden prinzipiell wählbar ist. In einer besonderen Ausführungsform sind gerade die zwei beziehungsweise vier primären Messpfade die Hauptmesspfade und der eine beziehungsweise die beiden sekundären Messpfade der Diagnosemesspfad oder die Diagnosemesspfade.

Diejenigen Ultraschallwandler, deren zugehörige primäre Messpfade den geringsten Abstand zur Achse der Rohrleitung aufweisen, weisen bevorzugt verbreiterte Sende-und Empfangskeulen auf. Das sind somit diejenigen Ultraschallwandler, welche den mindestens einen sekundären Messpfad eröffnen. Bei dieser Anordnung liegen die sekundären Messpfade möglichst nahe an der Rohrachse, also mitten in der Strömung, und sind dadurch gute, repräsentative Stützstellen des Strömungsprofils. Dies gilt besonders dann, wenn die Ultraschallwandler, welche die primären Messpfade mit geringstem Abstand zur Achse der Rohrleitung aufspannen, symmetrisch zu dieser Achse liegen. Dann sind nämlich die sekundären Messpfade automatisch diametral.

Besonders bevorzugt sind die Ultraschallwandler in einer symmetrischen Anordnung angebracht. Das ergibt einen einfachen Aufbau und ohne Vorwissen über Unregelmäßigkeiten der Strömung die beste Ausgangslage zu deren Approximation.

Die Auswertungseinheit ist bevorzugt dafür ausgebildet, die Zuordnung der Hauptmesspfade und des mindestens einen Diagnosemesspfades zu primären Messpfaden und sekundären Messpfaden während des Betriebs zu ändern. Dies kann nur stichprobenartig, beispielsweise einmal in der Stunde oder auf Anforderung geschehen, aber auch in kurzen Zeitabständen bis hin zu einem Wechsel mit jedem Messzyklus. Die Änderung kann darüber hinaus während des Betriebs oder in einer Konfiguration erfolgen. Durch den Wechsel der Zuordnung wird quasi die Stützstellenauswahl bei der Approximation der Strömung durchmischt, so dass etwaige Artefakte der Auswahl, welcher Pfad ein Hauptmesspfad und welcher ein Diagnosemesspfad ist, eliminiert sind. Außerdem ist beispielsweise denkbar, in weiten Teilen des Betriebs sämtliche verfügbaren Messpfade für die Bestimmung des Hauptmesswerts heranzuziehen und nur ab und zu einen Diagnosemesswert zu dessen Plausibilisierung zu bilden.

Die Auswertungseinheit ist bevorzugt dafür ausgebildet, beim Senden eines Signals von einem Ultraschallwandler, der an einem sekundären Messpfad beteiligt ist, ein Empfangssignal an allen dem Ultraschallwandler durch einen primären Messpfad oder sekundären Messpfad zugeordneten Ultraschallwandlern gleichzeitig aufzunehmen und eine entsprechende Vielzahl von Signallaufzeiten zu berechnen. Sämtliche Messpfade, an denen ein sendender Ultraschallwandler beteiligt ist, werden so zeiteffektiv gemeinsam ausgewertet. Alternativ ist auch ein Multiplexing denkbar, bei dem die dem sendenden Ultraschallwandler mittels primärem oder sekundärem Messpfad zugehörigen empfangenden Ultraschallwandler nacheinander ausgewertet werden. Dann verlängert sich der Auswertungszyklus, dafür genügt eine einfachere Auswertungselektronik.

Die Auswertungseinheit ist bevorzugt dafür ausgebildet, in einem Messzyklus a) nacheinander je ein Signal von jedem Ultraschallwandler auszusenden, b) auf allen Messpfaden des jeweiligen Ultraschallwandlers eine Signallaufzeit zu berechnen, c) nachdem alle Signallaufzeiten des Messzyklus bestimmt sind, diese einander jeweils paarweise anhand der Messpfade zuzuordnen und daraus d) die Einzelmesswerte zu bestimmen. Bei diesem Ablauf werden alle Messpfade ohne gegenseitige Störungen ausgewertet.

Das Fluid ist bevorzugt Erdgas, welches nochmals bevorzugt in einer Pipeline strömt. Die Ultraschallmessvorrichtung wird dann also in Großanlagen eingesetzt, beispielsweise für transnationale Erdgaslieferungen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1     einen Schrägschnitt durch eine Rohrleitung mit den Ultraschallwandlern einer ersten Ausführungsform einer erfindungsgemäßen Ultraschallmessvorrichtung und deren Messpfaden;

Fig. 2     einen Längsschnitt durch die Rohrleitung und Ultraschallwandleranordnung gemäß Figur 1;

Fig. 3     einen Schrägschnitt ähnlich Figur 1 einer weiteren Ausführungsform der erfindungsgemäßen Ultraschallmessvorrichtung mit nur einem sekundären Messpfad;

Fig. 4     einen Schrägschnitt ähnlich Figur 1 einer weiteren Ausführungsform der erfindungsgemäßen Ultraschallmessvorrichtung mit vier statt acht Ultraschallwandlern;

Fig. 5     einen Schrägschnitt gemäß Figur 4 mit nur einem sekundären Messpfad;

Fig. 6     einen Schrägschnitt ähnlich Figur 1 einer weiteren Ausführungsform der erfindungsgemäßen Ultraschallmessvorrichtung mit zusätzlichen sekundären Messpfaden;

Fig. 7    ein Blockschaltbild der Signalverarbeitung und der Auswertungseinheit der Ultraschallmessvorrichtung; und

Fig. 8    eine Längsschnittdarstellung einer Ultraschallmessvorrichtung nach dem Stand der Technik zur Erläuterung des Differenzlaufzeitverfahrens.

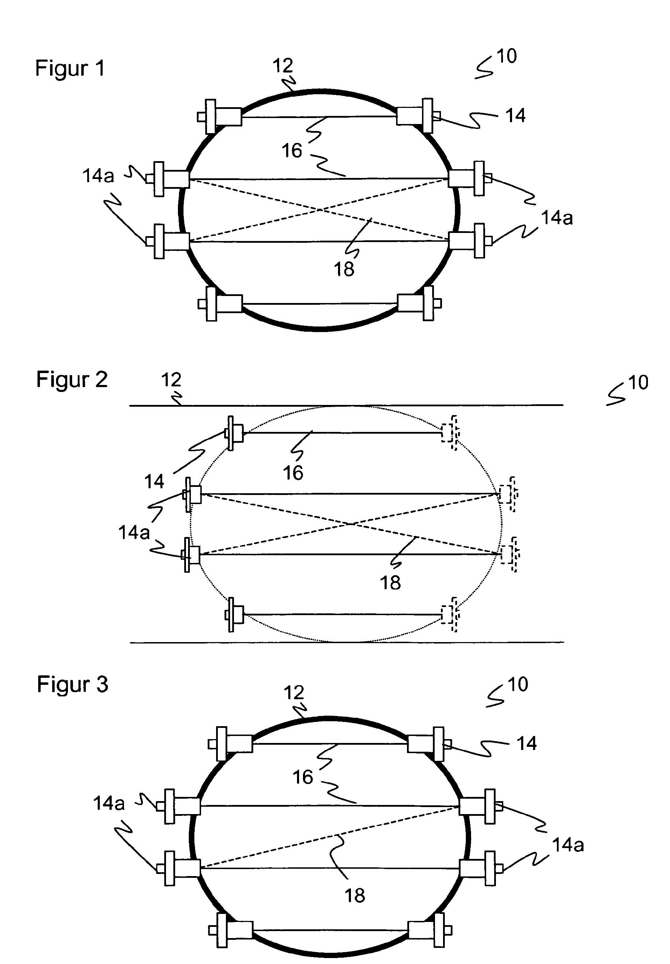

Figur 1 zeigt in einem Schrägschnitt eine erfindungsgemäße Ultraschallmessvorrichtung 10, die eine Vielzahl von in dem dargestellten Beispiel acht an dem Umfang einer Rohrleitung 12 angebrachten Ultraschallwandlern 14 umfasst. Die Ultraschallmessvorrichtung 10 weist üblicherweise einen eigenen Rohrleitungsabschnitt 12 auf, der in eine bestehende Rohrleitung, beispielsweise eine Erdgaspipeline, an einem gewünschten Messort geflanscht wird. Die Strömungsrichtung eines Fluids in der Rohrleitung 12 verläuft in Figur 1 in die Papierebene hinein. Die eine Hälfte der Ultraschallwandler 14, beispielsweise die links dargestellten vier Ultraschallwandler 14, ist gegenüber der anderen Hälfte stromaufwärts oder stromabwärts versetzt angeordnet.

Figur 1 ist ein Schrägschnitt, der diesen Versatz zur zweidimensionalen Darstellbarkeit kompensiert, so dass die Ultraschallwandler 14 auf einer Ellipse in der Darstellungsebene liegen. Figur 2 zeigt dieselbe Ultraschallmessvorrichtung 10 in einem Längsschnitt. Dabei sind die Ultraschallwandler 14 verkürzt, um ihre Schräglage anzudeuten. Die im linken Teil mit durchgezogenen Linien dargestellten Ultraschallwandler 14 sind in der dem Betrachter zugewandten, die übrigen mit gestrichelten Linien dargestellten Ultraschallwandler 14 in der dem Betrachter abgewandten Rohrwand angeordnet.

Jeweils zwei Ultraschallwandler 14 sind mit ihren Schallachsen zueinander ausgerichtet und spannen zwischen sich einen primären Messpfad 16 auf, der mit durchgezogenen Linien dargestellt ist. Die mittleren vier Ultraschallwandler 14a haben einen breiteren Schallkegel, so dass nicht nur der jeweils direkt gegenüber angeordnete Ultraschallwandler 14a, sondern auch dessen unmittelbarer oder sogar möglicherweise ein noch weiter entfernter Nachbar Ultraschall empfängt. Dadurch werden sekundäre Messpfade 18 aufgespannt, die mit gestrichelten Linien dargestellt sind. Diejenigen Ultraschallwandler 14, die nicht an sekundären Messpfaden 18 beteiligt sind, haben dagegen einen möglichst schmalen Schallkegel, um die Ultraschallenergie möglichst effizient zu nutzen. Es ist aber auch denkbar, dass diese Ultraschallwandler 14 denselben breiteren Öffnungswinkel ihres Schallkegels aufweisen. Die dabei entstehenden sekundären Messpfade bleiben dann in dieser Ausführungsform ungenutzt.

Eine weiter unten im Zusammenhang mit Figur 7 näher erläuterte Auswertungseinheit bestimmt für jeden primären Messpfad 16 oder sekundären Messpfad 18 die Laufzeit bei Messung mit und gegen die Strömung. Dabei ist das Messprinzip dasjenige, welches einleitend im Zusammenhang mit Figur 8 beschrieben wurde. Jeder Ultraschallwandler 14 arbeitet abwechselnd als Sender und Empfänger, so dass in jedem Messpfad 16, 18 die Laufzeit eines Ultraschallpulses mit und gegen die Strömung bestimmt wird. Aus diesen Laufzeiten beziehungsweise der Laufzeitdifferenz bestimmt die Auswertungseinheit für jeden Messpfad je eine Schätzung der Strömungsgeschwindigkeit.

Anschließend bildet die Auswertungseinheit zwei Gruppen aus diesen Schätzungen. Die eine Gruppe wird zu dem eigentlichen Hauptmesswert verrechnet. Dazu wird ein Durchschnitt errechnet, wobei aber der Einfluss der einzelnen Schätzungen anhand der Geometrie des zugrundeliegenden Messpfades 16, 18 und deren Bedeutung für das gesamte Strömungsprofil gewichtet werden kann. Die andere Gruppe wird nach demselben Grundprinzip zu einem unabhängig bestimmten zweiten Messwert verrechnet, der als Diagnosemesswert verwendet wird.

Hauptmesswert und Diagnosemesswert werden anschließend verglichen. Wenn die Abweichung größer ist, als die angestrebte Messgenauigkeit erlaubt, ist dies ein Zeichen für eine Fehlfunktion oder eine Verschmutzung des Rohres 12 oder eines Ultraschallwandlers 14. Die Auswertungseinheit gibt dann beispielsweise eine Warnung oder eine Wartungsanforderung aus.

Die Zuordnung der beiden Gruppen von Schätzungen ist prinzipiell frei. In der Regel werden aber der Bestimmung des Hauptmesswerts mehr Messpfade 16, 18 zugewiesen und beispielsweise nur ein oder zwei Messpfade 16, 18 als Diagnosemesspfade verwendet. In einer bevorzugten Ausführungsform sind dies gerade die sekundären Messpfade 18. Wenn wie in Figur 1 die der Rohrachse nächstgelegenen Ultraschallwandler 14a die sekundären Messpfade 18 aufspannen, so ergibt sich ein diametral verlaufender Diagnosepfad, der besonders empfindlich auf Änderungen des Strömungsprofils reagiert.

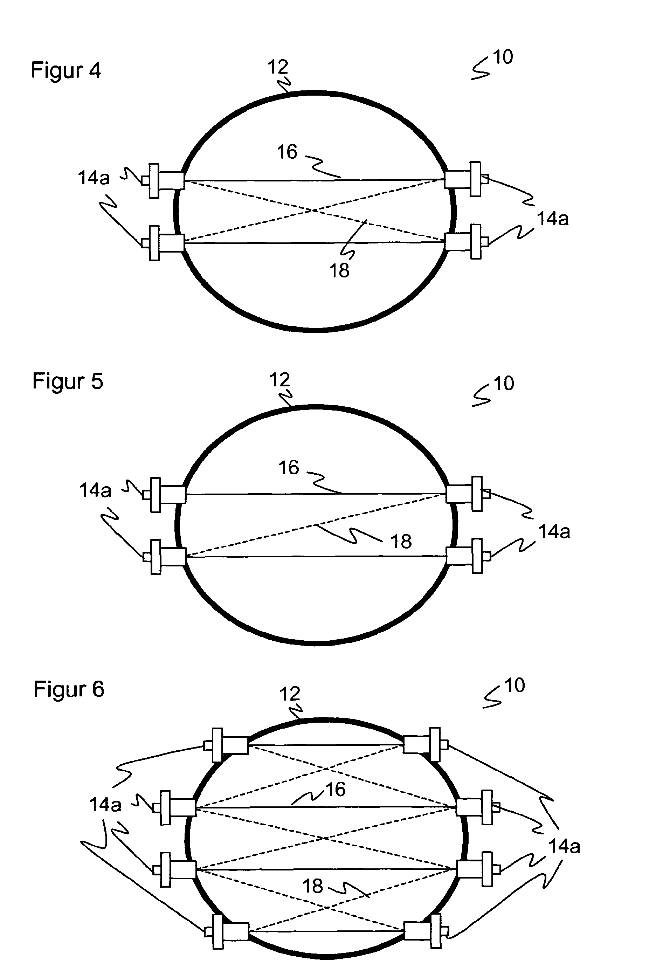

Für das Pfadlayout steht eine Vielzahl von geometrischen Anordnungen der Ultraschallwandler 14 zur Verfügung, von denen in den Figuren 3 bis 6 einige beispielhaft gezeigt sind. Die Ausführungsform gemäß Figur 3 unterscheidet sich von derjenigen gemäß Figur 1 darin, dass nur ein sekundärer Messpfad 18 vorgesehen ist. In den Ausführungsformen gemäß Figur 4 und Figur 5 ist die Gesamtzahl von Ultraschallwandlern 14 auf vier reduziert, wobei in Figur 4 zwei sekundäre Messpfade 18 vorgesehen sind und in Figur 5 nur ein sekundärer Messpfad 18 vorgesehen ist. In der Ausführungsform gemäß Figur 6 sind wiederum acht Ultraschallwandler 18 eingesetzt, wobei hier sämtliche möglichen sekundären Messpfade 18 zwischen nächsten Nachbarn realisiert sind, um die räumliche Abdeckung des Strömungsprofils zu verbessern. All dies sind nur Beispiele für Pfadlayouts, die untereinander auch zu Mischformen verbunden werden können und auf welche die Erfindung nicht beschränkt ist. Beispielsweise ist nicht zwingend, dass die primären Messpfade 16 parallel zueinander verlaufen.

Figur 7 erläutert die Auswertung der primären Messpfade 16 und der sekundären Messpfade 18. Ein Ultraschallwandler 14a sendet einen Ultraschallpuls aus, welcher einerseits auf einem primären Messpfad 16 von dem direkt zugeordneten Ultraschallwandler 14 und andererseits aufgrund des verbreiterten Schallkegels auch auf sekundären Messpfaden 18 von den Ultraschallwandlern 14a empfangen wird, die dem direkt zugeordneten Ultraschallwandler 14 unmittelbar benachbart sind. Es sind weitere Ultraschallwandler 14 vorgesehen, die aber in dem dargestellten Teil des Auswertungszyklus' nicht beteiligt sind, weil sie von dem aktuell sendenden Ultraschallwandler 14a keinen Ultraschall empfangen.

Jeder Ultraschallwandler 14, 14a ist über einen Verstärker 20 und einen Analog-DigitalWandler 22 mit einer Auswertungseinheit 24 verbunden, die auf einem Mikroprozessor, als DSP (Digital Signal Processor), als FPGA (Field Programmable Gate Array), in A-SIC (Application-Specific Integrated Circuit) oder einem ähnlichen digitalen Logikbaustein implementiert ist. Anstelle einer mehrkanaligen Auswertungselektronik ist auch beispielsweise ein Zeitmultiplexing denkbar.

Die Auswertungseinheit 24 nimmt so das Empfangssignal aller Ultraschallwandler 14 in Reaktion auf den ausgesandten Ultraschallpuls auf. Daraus wird in Kenntnis des Sendezeitpunkts eine Signallaufzeit berechnet. In einem Auswertungszyklus senden nacheinander jeweils eine oder, soweit Signalüberlappungen durch die Geometrie ausgeschlossen wird, auch mehrere Ultraschallwandler 14 parallel einen Ultraschallpuls aus. Nachdem jeder Ultraschallwandler 14 einmal die Rolle als Sender eingenommen hat, stehen auf allen Messpfaden 16, 18 die Laufzeiten mit und gegen die Strömung zur Verfügung, so dass nach richtiger Zuordnung die Auswertungseinheit 24 die Differenzlaufzeiten bestimmen kann. Die somit erhaltenen Einzelmesswerte auf jedem Messpfad 16, 18 werden dann in der oben beschriebenen Weise zu dem Hauptmesswert und dem Diagnosemesswert verrechnet und diese wiederum untereinander verglichen.

**Patentansprüche**

1. Ultraschallmessvorrichtung (10) zum Messen der Strömungsgeschwindigkeit eines Fluids in einer Rohrleitung (12) mit einer Vielzahl von Ultraschallwandlern (14), die zwischen sich jeweils paarweise mehrere Hauptmesspfade und mindestens einen Diagnosemesspfad aufspannen, wobei die Messpfade auf dem Querschnitt der Rohrleitung (12) geometrisch verteilt sind, um eine mittlere. Strömungsgeschwindigkeit auf der gesamten Querschnittsfläche zu ermitteln, und mit einer Auswertungseinheit (24), die dafür ausgebildet ist, auf jedem Messpfad (16, 18) je einen Einzelmesswert für die Strömungsgeschwindigkeit aus Laufzeiten von mit und gegen die Strömung ausgesandtem und empfangenem Ultraschall zu bestimmen, Einzelmesswerte der Hauptmesspfade zu einem Hauptmesswert für die Strömungsgeschwindigkeit zu verrechnen, aus dem mindestens einen Einzelmesswert des Diagnosemesspfades einen Diagnosemesswert zu bestimmen und den Hauptmesswert und den Diagnosemesswert miteinander zu vergleichen, um eine Abweichung, die größer ist als eine angestrebte Messgenauigkeit, als eine Fehlfunktion oder eine Verschmutzung zu erkennen,
**dadurch gekennzeichnet,**
**dass** zumindest einige der Ultraschallwandler (14a), derart ausgestaltet sind, dass sie im Betrieb verbreiterte Sende- und Empfangskeulen aufweisen, so dass mehrere Ultraschallwandler (14, 14a) in deren Sende- und Empfangskeule angeordnet sind, damit zusätzlich zu den zwischen je zwei aufeinander ausgerichteten Ultraschallwandler aufgespannten primären Messpfaden (16) mindestens ein zusätzlicher, sekundärer Messpfad (18) als Hauptmesspfad oder als Diagnosemesspfad eröffnet ist.

2. Ultraschallmessvorrichtung (10) nach Anspruch 1, wobei mindestens ein Diagnosemesspfad ein sekundärer Messpfad (18) ist und/oder wobei der mindestens eine Diagnosemesspfad diametral angeordnet ist.

3. Ultraschallmessvorrichtung (10) nach Anspruch 1 oder 2,
wobei die Hauptmesspfade mit den primären Messpfaden (16) übereinstimmen und/oder der mindestens eine Diagnosemesspfad mit dem mindestens einen sekundären Messpfad (18) übereinstimmt.

4. Ultraschallmessvorrichtung (10) nach einem der vorhergehenden Ansprüche, wobei die primären Messpfade (16) parallel zueinander ausgerichtet sind.

5. Ultraschallmessvorrichtung (10) nach einem der vorhergehenden Ansprüche, wobei zwei oder vier primäre Messpfade (16) vorgesehen sind und/oder wobei ein oder zwei sekundäre Messpfade (18) vorgesehen sind.

6. Ultraschallmessvorrichtung (10) nach einem der vorhergehenden Ansprüche, wobei diejenigen Ultraschallwandler (14a), deren zugehörige primäre Messpfade (16) den geringsten Abstand zur Achse der Rohrleitung (12) aufweisen, verbreiterte Sende- und Empfangskeulen aufweisen.

7. Ultraschallmessvorrichtung (10) nach einem der vorhergehenden Ansprüche, wobei die Ultraschallwandler (14) in einer symmetrischen Anordnung angebracht sind.

**8.** Ultraschallmessvorrichtung (10) nach einem der vorhergehenden Ansprüche, wobei die Auswertungseinheit (24) dafür ausgebildet ist, die Zuordnung der Hauptmesspfade und des mindestens einen Diagnosemesspfades zu primären Messpfaden (16) und sekundären Messpfaden (18) zu ändern.

**9.** Ultraschallmessvorrichtung (10) nach einem der vorhergehenden Ansprüche, wobei die Auswertungseinheit (24) dafür ausgebildet ist, beim Senden eines Signals von einem Ultraschallwandler (14a), der an einem sekundären Messpfad beteiligt ist, ein Empfangssignal an allen dem Ultraschallwandler (14a) durch einen primären Messpfad (16) oder sekundären Messpfad (18) zugeordneten Ultraschallwandlern (14, 14a) gleichzeitig aufzunehmen und eine entsprechende Vielzahl von Signallaufzeiten zu berechnen.

**10.** Ultraschallmessvorrichtung (10) nach einem der vorhergehenden Ansprüche, wobei die Auswertungseinheit (24) dafür ausgebildet ist, in einem Messzyklus a) nacheinander je ein Signal von jedem Ultraschallwandler (14) auszusenden, b) auf allen Messpfaden des jeweiligen Ultraschallwandlers (14) eine Signallaufzeit zu berechnen, c) nachdem alle Signallaufzeiten des Messzyklus bestimmt sind, diese einander jeweils paarweise anhand der Messpfade (16, 18) zuzuordnen und daraus d) die Einzelmesswerte zu bestimmen.

**11.** Ultraschallmessvorrichtung (10) nach einem der vorhergehenden Ansprüche, wobei das Fluid Erdgas und/oder die Rohrleitung (12) eine Pipeline ist.

**12.** Verfahren zum Messen der Strömungsgeschwindigkeit eines Fluids in einer Rohrleitung (12) mittels Ultraschall, wobei eine Vielzahl von Ultraschallwandlern (14) mehrere Hauptmesspfade und mindestens einen Diagnosemesspfad aufspannen, wobei die Messpfade auf dem Querschnitt der Rohrleitung (12) geometrisch verteilt sind, um eine mittlere Strömungsgeschwindigkeit auf der gesamten Querschnittsfläche zu ermitteln, und wobei auf jedem Messpfad (16, 18) je ein Einzelmesswert für die Strömungsgeschwindigkeit aus Laufzeiten von mit und gegen die Strömung ausgesandtem und empfangenem Ultraschall bestimmt wird, Einzelmesswerte der Hauptmesspfade zu einem Hauptmesswert für die Strömungsgeschwindigkeit verrechnet werden, aus dem mindestens einen Einzelmesswert des Diagnosemesspfades ein Diagnosemesswert bestimmt und der Hauptmesswert mit dem Diagnosemesswert verglichen wird, um eine Abweichung, die größer ist als eine angestrebte Messgenauigkeit, als eine Fehlfunktion oder eine Verschmutzung zu erkennen, **dadurch gekennzeichnet, dass** zumindest einige der Ultraschallwandler (14a) durch verbreiterte Sende- und Empfangskeulen Messpfade (16, 18) zu mehreren Ultraschallwandlern (14, 14a) bilden, so dass außer den zwischen je zwei aufeinander ausgerichteten Ultraschallwandlern (14, 14a) aufgespannten primären Messpfaden (16) mindestens ein zusätzlicher, sekundärer Messpfad (18) als Hauptmesspfad oder als Diagnosemesspfad verwendet wird.

**13.** Verfahren nach Anspruch 12, wobei die Zuordnung der Hauptmesspfade und des mindestens einen Diagnosemesspfades zu primären Messpfaden (16) und sekundären Messpfaden (18) geändert wird.

**14.** Verfahren nach Anspruch 12 oder 13, wobei beim Senden eines Signals von einem Ultraschallwandler (14a), der an einem sekundären Messpfad (18) beteiligt ist, ein Empfangssignal an allen dem Ultraschallwandler (14a) durch einen primären Messpfad (16) oder sekundären Messpfad (18) zugeordneten Ultraschallwandlern (14, 14a) gleichzeitig aufgenommen und eine entsprechende Vielzahl von Signallaufzeiten berechnet wird.

**15.** Verfahren nach einem der Ansprüche 13 bis 15, wobei in einem Messzyklus a) nacheinander je ein Signal von jedem Ultraschallwandler (14, 14a) ausgesandt wird, b) auf allen Messpfaden des jeweiligen Ultraschallwandlers (14, 14a) eine Signallaufzeit berechnet wird, c) nachdem alle Signallaufzeiten des Messzyklus bestimmt sind, diese einander jeweils paarweise anhand der Messpfade (16, 18) zugeordnet werden und daraus d) die Einzelmesswerte bestimmt werden.

**Claims**

**1.** An ultrasound measurement apparatus (10) for measuring the flow speed of a fluid in a conduit (12) having a plurality of ultrasonic transducers (14) pairs of which span between them a plurality of main measurement paths and at least one diagnosis measurement path, wherein the measurement paths are geometrically distributed over the cross section of the conduit (12) in order to determine an average flow speed over the entire cross section area, and having an evaluation unit (24) which is configured to determine a respective individual measured value for the flow speed from transit times of ultrasound transmitted and received with and against the flow on each measurement path (16, 18), to calculate a main measured value for the flow speed from individual measured values of the main measurement paths, to determine a measured diagnosis value from the at least one individual measured value of the diagnosis measured path and to compare the main measured value and the measured diagnosis value with one another in order to detect a discrepancy greater than a desired measurement accuracy as a malfunction or a contamination, **characterized in that** at least some of the ultrasonic transducers (14a) are configured so that, during operation, they have widened transmission and reception lobes so that a plurality of ultrasonic transducers (14, 14a) are arranged in their transmission and reception lobes so that, in addition to the primary measurement paths (16) spanned between two mutually aligned ultrasonic transducers, at least one additional secondary measurement path (18) is opened as a main measurement path or as a diagnosis measurement path.

2. An ultrasound measurement apparatus (10) in accordance with claim 1, wherein at least one diagnosis measurement path is a secondary measurement path (18); and/or wherein the at least one diagnosis measurement path is arranged diametrically.

3. An ultrasound measurement apparatus (10) in accordance with claim 1 or 2, wherein the main measurement paths correspond to the primary measurement paths (16) and/or the at least one diagnosis measurement path corresponds to the at least one secondary measurement path (18).

4. An ultrasound measurement apparatus (10) in accordance with any of the preceding claims, wherein the primary measurement paths (16) are aligned parallel to one another.

5. An ultrasound measurement apparatus (10) in accordance with any of the preceding claims, wherein two or four primary measurement paths (16) are provided; and/or wherein one or two secondary measurement paths (18) are provided.

6. An ultrasound measurement apparatus (10) in accordance with any of the preceding claims, wherein those ultrasound transducers (14a) whose associated primary measurement paths (16) have the smallest spacing from the axis of the conduit (12) have widened transmission and reception lobes.

7. An ultrasound measurement apparatus (10) in accordance with any of the preceding claims, wherein the ultrasonic transducers (14) are attached in a symmetrical arrangement.

8. An ultrasound measurement apparatus (10) in accordance with any of the preceding claims, wherein the evaluation unit (24) is made to change the association of the main measurement paths and of the at least one diagnosis measurement path to primary measurement paths (16) and secondary measurement paths (18).

9. An ultrasound measurement apparatus (10) in accordance with any of the preceding claims, wherein the evaluation unit (24) is configured to, upon transmission of a signal from an ultrasonic transducer (14a) which is involved in a secondary measurement path, simultaneously pick up a received signal at all ultrasonic transducers (14, 14a) associated with the ultrasonic transducer (14a) by a primary measurement path (16) or a secondary measurement path (18) and to calculate a corresponding plurality of signal transit times.

10. An ultrasound measurement apparatus (10) in accordance with any of the preceding claims, wherein the evaluation unit (24) is configured to, in a measurement cycle, a) transmit a respective signal from each ultrasonic transducer (14) after one another, b) to calculate a signal transit time on all measurement paths of the respective ultrasonic transducer (14), c) to associate all the signal transit times of the measurement cycle, once they have been determined, with one another pairwise in each case with reference to the measurement paths (16, 18) and d) to determine the individual measurement values from them.

11. An ultrasound measurement apparatus (10) in accordance with any of the preceding claims, wherein the fluid is natural gas and/or the conduit (12) is a pipeline.

12. A method for measuring the flow speed of a fluid in a conduit (12) by means of ultrasound, wherein a plurality of ultrasonic transducers (14) span a plurality of main measurement paths and at least one diagnosis measurement path, wherein the measurement paths are geometrically distributed over the cross section of the conduit (12) in order to determine an average flow speed over the entire cross section area, and wherein, on each measurement path (16, 18), a respective individual measured value for the flow speed is determined from transit times of ultrasound transmitted and received with and against the flow, a main measured value for the flow speed is calculated from individual measured values of the main measurement paths, a measured diagnosis value is determined from the at least one individual measured value of the diagnosis measurement path and the main measured value is compared with the measured diagnosis value in order to detect a discrepancy greater than a desired measurement accuracy as a malfunction or a contamination, **characterized in that** at least some of the ultrasonic transducers (14a) form measurement paths (16, 18) by widened transmission and reception lobes to a plurality of ultrasonic transducers (14, 14a) so that at least one additional secondary measurement path (18) is used as a main measurement path or as a diagnosis measurement path apart from the primary measurement paths (16) spanned between two respective mutually aligned ultrasonic converters (14, 14a).

**13.** A method in accordance with claim 12, wherein the association of the main measurement paths and of the at least one diagnosis measurement path (16) with primary measurement paths (16) and secondary measurement paths (18) is changed.

**14.** A method in accordance with claim 12 or 13, wherein, on the transmission of a signal from an ultrasonic transducer (14a) which is involved in a secondary measurement path (18), a received signal is simultaneously picked up at all ultrasonic transducers (14, 14a) associated with the ultrasonic transducer (14a) by a primary measurement path (16) or a secondary measurement path (18) and a corresponding plurality of signal transit times is calculated.

**15.** A method in accordance with any of claims 12 to 14, wherein, in a measurement cycle, a) a respective signal is transmitted from each ultrasonic transducer (14) after one another, b) a signal transit time is calculated on all measurement paths of the respective ultrasonic transducer (14, 14a), c) all the signal transit times of the measurement cycle are associated, once they have been determined, with one another pairwise in each case with reference to the measurement paths (16, 18) and d) the individual measured values are determined from them.

**Revendications**

**1.** Dispositif de mesure par ultrasons (10) pour mesurer la vitesse d'écoulement d'un fluide dans une conduite tubulaire (12) avec une pluralité de transducteurs à ultrasons (14) qui définissent entre eux et respectivement par paires plusieurs trajets de mesure principaux et au moins un trajet de mesure de diagnostic, dans lequel les trajets de mesure sont répartis géométriquement sur la section transversale de la conduite tubulaire (12), afin de déterminer une vitesse d'écoulement moyenne sur la totalité de la surface de section transversale, et avec une unité d'évaluation (24) qui est réalisée pour déterminer sur chaque trajet de mesure (16, 18) à chaque fois une valeur de mesure individuelle pour la vitesse d'écoulement à partir des temps de parcours des ultrasons émis en sens contraire à l'écoulement et reçus, pour faire un calcul des valeurs de mesure individuelles des trajets de mesure principaux afin de donner une valeur de mesure principale pour la vitesse d'écoulement, pour déterminer à partir d'au moins une valeur de mesure individuelle du trajet de mesure de diagnostic une valeur de mesure de diagnostic, et pour comparer l'une à l'autre la valeur de mesure principale et la valeur de mesure de diagnostic afin de reconnaître une déviation supérieure à une exactitude de mesure visée comme étant un dysfonctionnement ou un encrassement,

**caractérisé en ce que** certains au moins des transducteurs à ultrasons (14a) sont conçus de telle façon qu'en fonctionnement ils présentent des lobes d'émission et de réception élargis, de sorte que plusieurs transducteurs à ultrasons (14, 14a) sont agencés dans leurs lobes d'émission et de réception afin d'ouvrir, additionnellement aux trajets de mesure primaires (16) définis respectivement entre deux transducteurs à ultrasons orientés l'un vers l'autre au moins un trajet de mesure secondaire additionnel (18) à titre de trajet de mesure principal ou à titre de trajet de mesure de diagnostic.

**2.** Dispositif de mesure à ultrasons (10) selon la revendication 1,
dans lequel au moins un trajet de mesure de diagnostic est un trajet de mesure secondaire (18) et/ou dans lequel ledit au moins un trajet de mesure de diagnostic est agencé diamétralement.

**3.** Dispositif de mesure à ultrasons (10) selon la revendication 1 ou 2,
dans lequel les trajets de mesure principaux coïncident avec les trajets de mesure primaires (18) et/ou ledit au moins un trajet de mesure de diagnostic coïncide avec ledit au moins un trajet de mesure secondaire (15).

**4.** Dispositif de mesure à ultrasons (10) selon l'une des revendications précédentes,
dans lequel les trajets de mesure primaires (16) sont orientés parallèlement les uns aux autres.

**5.** Dispositif de mesure à ultrasons (10) selon l'une des revendications précédentes,
dans lequel il est prévu deux ou quatre trajets de mesure primaires (16) et/ou dans lequel il est prévu un ou deux trajets de mesure secondaires (18).

**6.** Dispositif de mesure à ultrasons (10) selon l'une des revendications précédentes, dans lequel ceux des transducteurs à ultrasons (14a) dont les trajets de mesure primaires associés (16) présentent la plus petite de distance par rapport à l'axe de la conduite tubulaire (12) présentent des lobes d'émission et de réception élargis.

**7.** Dispositif de mesure à ultrasons (10) selon l'une des revendications précédentes,
dans lequel les transducteurs à ultrasons (14) sont montés dans un agencement symétrique.

**8.** Dispositif de mesure à ultrasons (10) selon l'une des revendications précédentes, dans lequel l'unité d'évaluation (24) est réalisée pour modifier l'affectation des trajets de mesure principaux et dudit au moins un trajet de mesure de diagnostic en trajets de mesure primaires (16) et en trajets de mesure secondaires (18).

**9.** Dispositif de mesure à ultrasons (10) selon l'une des revendications précédentes, dans lequel l'unité d'évaluation (24) est réalisée pour, lors de l'émission d'un signal depuis un transducteur à ultrasons (14a) qui participe à un trajet de mesure secondaire, enregistrer simultanément un signal de réception au niveau de tous les transducteurs à ultrasons (14, 14a) associés au transducteur à ultrasons (14a) par un trajet de mesure primaire (16) ou par un trajet de mesure secondaire (18), et pour calculer une pluralité correspondante de temps de parcours des signaux.

**10.** Dispositif de mesure à ultrasons (10) selon l'une des revendications précédentes,
dans lequel l'unité d'évaluation (24) est réalisée pour, dans un cycle de mesure :

a) émettre les uns après les autres un signal respectif depuis chaque transducteur à ultrasons (14),
b) calculer sur tous les trajets de mesure du transducteur à ultrasons concerné (14) un temps de parcours des signaux,
c) après avoir déterminé tous les temps de parcours des signaux du cycle de mesure, associer ceux-ci les uns aux autres par paires respectives au moyen des trajets de mesure (16, 18) et
d) déterminer à partir de ceux-ci les valeurs de mesure individuelles.

**11.** Dispositif de mesure à ultrasons (10) selon l'une des revendications précédentes,
dans lequel le fluide est du gaz naturel et/ou la conduite tubulaire (12) est un pipeline.

**12.** Procédé pour mesurer la vitesse d'écoulement d'un fluide dans une conduite tubulaire (12) au moyen d'ultrasons, dans lequel une pluralité de transducteurs à ultrasons (14) définissent plusieurs trajets de mesure principaux et au moins un trajet de mesure de diagnostic, dans lequel les trajets de mesure sont répartis géométriquement sur la section transversale de la conduite tubulaire (12) afin de déterminer une vitesse d'écoulement moyenne sur la totalité de la surface de section transversale, et dans lequel on détermine sur chaque trajet de mesure (16, 18) à chaque fois une valeur de mesure individuelle pour la vitesse d'écoulement à partir des temps de parcours des ultrasons émis et reçus dans le sens de l'écoulement et en sens contraire, on fait un calcul des valeurs de mesure individuelles des trajets de mesure principaux afin de donner une valeur de mesure principale pour la vitesse d'écoulement, on détermine à partir de ladite au moins une valeur de mesure individuelle du trajet de mesure de diagnostic une valeur de mesure de diagnostic, et on compare la valeur de mesure principale avec la valeur de mesure de diagnostic afin de reconnaître une déviation supérieure à une exactitude de mesure visée comme étant un dysfonctionnement ou un encrassement,
**caractérisé en ce que**
certains au moins des transducteurs à ultrasons (14a) forment, par des lobes d'émission et de réception élargis, des trajets de mesure (16, 18) à plusieurs des transducteurs à ultrasons (14, 14a), de sorte qu'en plus des trajets de mesure primaires (16) définis entre deux transducteurs à ultrasons respectifs (14, 14a) orientés l'un vers l'autre, au moins un trajet de mesure secondaire additionnel (18), à titre de trajet de mesure principal ou à titre de trajet de mesure de diagnostic.

**13.** Procédé selon la revendication 12,
dans lequel l'affectation des trajets de mesure principaux et dudit au moins un trajet de mesure de diagnostic en trajets de mesure primaires (16) et en trajets de mesure secondaires (18) est modifiée.

**14.** Procédé selon la revendication 12 ou 13, dans lequel, lors de l'émission d'un signal depuis un transducteur à ultrasons (14a) qui participe à un trajet de mesure secondaire (18), on enregistre un signal de réception simultanément au niveau de tous les transducteurs à ultrasons (14a, 14a) associés par un trajet de mesure primaire (16) ou un trajet de mesure secondaire (18), et on calcule une pluralité correspondante de temps de parcours des signaux.

**15.** Procédé selon l'une des revendications 13 à 15, dans lequel, dans un cycle de mesure

a) on émet successivement un signal depuis chaque transducteur à ultrasons (14, 14a),
b) on calcule sur tous les trajets de mesure du transducteur à ultrasons concerné (14, 14a) un temps de parcours des signaux,
c) après avoir déterminé tous les temps de propagation des signaux du cycle de mesure, on associe ceux-ci les uns aux autres respectivement par paires au moyen des trajets de mesure (16, 18) et
d) on détermine à partir de ceux-ci les valeurs de mesure individuelles.

Figur 1

Figur 2

Figur 3

Figur 4

Figur 5

Figur 6

Figur 7

Figur 8
Stand der Technik

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2072972 A1
- DE 102007004936 A1
- DE 102008029772 A1
- EP 1378727 A1

**In der Beschreibung aufgeführte Nicht-Patentliteratur**

- **VON MICHAEL BROWN.** Custody Transfer Implementation of Multi-path Ultrasonic Meters. *A.G.A. Operating Section Operations Conference in Seattle, Washington,* 18. Mai 1998